# EUROPÄISCHE PATENTSCHRIFT

(11) **EP 3 482 552 B1**
(45) Veröffentlichungstag und Bekanntmachung des Hinweises auf die Patenterteilung: **23.03.2022**
(21) Anmeldenummer: 17720834.5
(22) Anmeldetag: 05.05.2017
(51) Int. Cl.: H04L 29/08, H04L 29/06

(54) **NETZWERKENTITÄT ZUM KOMMUNIZIEREN MIT EINER WEITEREN NETZWERKENTITÄT ÜBER EIN KOMMUNIKATIONSNETZWERK**
NETWORK ENTITY FOR COMMUNICATING WITH ANOTHER NETWORK ENTITY VIA A COMMUNICATION NETWORK
DISPOSITIF DE RÉSEAU POUR COMMUNIQUER AVEC UN AUTRE DISPOSITIF DE RÉSEAU VIA UN RÉSEAU DE COMMUNICATION

(30) Priorität: 08.07.2016 EP 16178717
(43) Veröffentlichungstag der Anmeldung: 15.05.2019
(73) Patentinhaber: Deutsche Telekom AG, 53113 Bonn (DE)
(72) Erfinder: NEUBACHER, Andreas, A-2100 Korneuburg (AT)
(74) Vertreter: Braun-Dullaeus Pannen Emmerling Patent- & Rechtsanwaltspartnerschaft mbB
(86) Internationale Anmeldenummer: PCT/EP2017/060839
(87) Internationale Veröffentlichungsnummer: WO 2018/007043

(56) Entgegenhaltungen:
- EP-A1- 2 579 510
- WO-A1-02/09390
- WO-A1-03/045016
- JACOBSON VAN ET AL: "Networking Named Content", CONEXT '09 PROCEEDINGS OF THE 5TH INTERNATIONAL CONFERENCE ON EMERGING NETWORKING EXPERIMENTS AND TECHNOLOGIES; DECEMBER 1 - 4, 2009; ROME, ITALY, ASSOCIATION FOR COMPUTING MACHINERY, NEW YORK, NY, US , 1. Dezember 2009 (2009-12-01), Seiten 1-12, XP002660911, ISBN: 978-1-60558-636-6 Gefunden im Internet: URL:http://conferences.sigcomm.org/co-next /2009/papers/Jacobson.pdf [gefunden am 2016-08-24]

## Beschreibung

### TECHNISCHES GEBIET

Die vorliegende Erfindung betrifft das Gebiet der Übertragung von Daten über ein Kommunikationsnetzwerk auf der Basis eines Protokolls.

### TECHNISCHER HINTERGRUND

Zur Übertragung von Daten über ein Kommunikationsnetzwerk werden Schnittstellen zwischen zwei oder mehreren logischen Elementen des Kommunikationsnetzwerkes definiert. Die Schnittstellen werden dabei im Allgemeinen durch zumindest zwei Merkmale beschrieben.

Zum einen wird ein Protokoll definiert, dass wiederum durch sogenannte Information Elements (IEs) bzw. entsprechende Datenfelder, in welchen die Daten transportiert werden, beschrieben wird. Zum anderen erfolgt eine Beschreibung von Prozeduren, welche nach Empfang eines bestimmten Information Elements (IE) oder eines bestimmten Datenfeldes ausgeführt werden.

Beispielsweise kann durch den Empfang eines Datenpakets nach dem Transmission Control Protocol / Internet Protocol (TCP/IP), welches in einem Port-Datenfeld die Nummer 80 aufweist, ein Empfänger darauf schließen, dass es sich um einen Server handelt. Falls es sich ferner um ein Datenpaket nach dem Hypertext Transfer Protocol (HTTP) handelt, kann ein Sender beispielsweise anzeigen, dass Daten von einer Webseite abgefragt werden sollen. Dadurch wird folglich angezeigt, dass die nachfolgenden Datenfelder gemäß einer speziellen Vereinbarung zu lesen und zu interpretieren sind, beispielsweise wie Informationen in einem Browser dargestellt werden sollen.

Diese Vereinbarungen, welche beispielsweise das Vorgehen definieren falls die Nummer 80 in einem Port-Datenfeld steht, wie das Hypertext Transfer Protocol (HTTP) zu verwenden ist, und wie ein Server mit Daten umzugehen hat, wurde vorab in verschiedenen Standardisierungsgremien festgelegt. Im Zuge des Trends zur Virtualisierung, d.h. der Entkopplung von Hardware und Software, sowie der Entkopplung von Laufzeitumgebung (engl. Run-time Environment) und Programmcode, in welcher ein Programm oder eine Funktion programmiert wurde, hat diese beschriebene Vorgehensweise jedoch Nachteile.

Durch das Festlegen von Prozeduren werden beispielsweise die Terminierungspunkte der Protokolle zwangsläufig fixiert. Ferner werden die Prozeduren, das Format und die Vereinbarungen, welche beispielsweise mittels der Information Elements (IEs) eines Protokolls transportiert werden, schon vorab festgelegt.

Dadurch wird beispielsweise die Flexibilität limitiert, Funktionen zwischen Netzwerkknoten oder Netzwerkelementen zu verschieben. Ferner werden die Vorteile einer möglichen Virtualisierung beim Übertragen von Daten nicht vollständig genutzt.

Die Druckschrift US 2016/0043940 A1 offenbart einen Netzwerkknoten zum Weiterleiten von Datenpaketen, wobei der Netzwerkknoten ein programmierbares Datenpaket verarbeiten kann. Ein Ressourcenfeld kann dabei Befehle enthalten, welche eine Operation auf einer entsprechenden Ressource des Netzwerksknotens ausführen können.

Die Druckschrift WO 02/09390 A1 offenbart ein Computernetzwerk mit einer Mehrzahl von Knoten zum Übertragen von Informationen mittels Datenpaketen. Ein Datenpaket umfasst dabei zumindest direkt repräsentierte Daten und selbst-optimierenden Code. Der selbstoptimierende Code kann durch einen Knoten ausgeführt werden.

### BESCHREIBUNG DER ERFINDUNG

Es ist daher die Aufgabe der vorliegenden Erfindung, ein effizientes Konzept zum Handhaben von Daten, insbesondere zum Weiterleiten von Daten über ein Kommunikationsnetzwerk oder zum Verarbeiten von Daten, zu schaffen.

Diese Aufgabe wird durch die Merkmale der unabhängigen Ansprüche gelöst. Vorteilhafte Ausführungsformen der Erfindung sind Gegenstand der Beschreibung, der Zeichnungen sowie der abhängigen Ansprüche.

Die vorliegende Erfindung basiert auf der Erkenntnis, dass die obige Aufgabe durch eine Netzwerkentität gelöst werden kann, welche ausgebildet ist, ein Protokollobjekt zu erzeugen, welches eine Protokollvorschrift zum Handhaben von Daten durch eine weitere Netzwerkentität anzeigt. Die Daten können mit dem Protokollobjekt in einem Datenpaket an die weitere Netzwerkentität über ein Kommunikationsnetzwerk ausgesendet werden. Die weitere Netzwerkentität ist ausgebildet, das Datenpaket mit den Daten und dem Protokollobjekt zu empfangen, die Protokollvorschrift auf der Basis des Protokollobjekts zu bestimmen, und die Daten auf der Basis der Protokollvorschrift zu handhaben. Das Handhaben der Daten kann beispielsweise ein Verarbeiten der Daten oder ein Weiterleiten der Daten über das Kommunikationsnetzwerk umfasst.

Das Protokollobjekt umfasst einen ausführbaren Programmcode oder ist durch einen ausführbaren Programmcode gebildet, wobei der ausführbare Programmcode durch die weitere Netzwerkentität ausführbar ist. Der ausführbare Programmcode kann in maschinen-lesbarer Form zur Ausführung durch einen Prozessor der weiteren Netzwerkentität bereitgestellt sein. Das Protokollobjekt kann mithin ein Softwareobjekt sein.

Dadurch wird der Vorteil erreicht, dass eine unmittelbare Handhabung der Daten durch die weitere Netzwerkentität unter Verwendung des Protokollobjekts realisiert werden kann. Mithin kann eine flexible Anpassung der Protokollvorschrift ohne Modifikationen der Hardware und/oder Software erfolgen.

Gemäß einem ersten Aspekt betrifft die Erfindung eine Netzwerkentität zum Kommunizieren mit einer weiteren Netzwerkentität über ein Kommunikationsnetzwerk. Die Netzwerkentität umfasst einen Prozessor, welcher ausgebildet ist, Daten bereitzustellen und ein Protokollobjekt zu erzeugen, wobei das Protokollobjekt eine Protokollvorschrift zum Handhaben der Daten durch die weitere Netzwerkentität anzeigt. Der Prozessor ist ferner ausgebildet, die Daten mit dem Protokollobjekt zu verknüpfen, und ein Datenpaket zu erzeugen, wobei das Datenpaket die Daten und das Protokollobjekt umfasst. Die Netzwerkentität umfasst ferner eine Kommunikationsschnittstelle, welche ausgebildet ist, das Datenpaket an die weitere Netzwerkentität über das Kommunikationsnetzwerk auszusenden. Dadurch wird der Vorteil erreicht, dass ein effizientes Konzept zum Handhaben von Daten realisiert werden kann.

Gemäß einer Ausführungsform umfasst die Netzwerkentität ferner einen Speicher, wobei die Daten in dem Speicher vorgespeichert sind. Dadurch wird der Vorteil erreicht, dass die Daten effizient bereitgestellt werden können.

Das Protokollobjekt umfasst einen ausführbaren Programmcode oder ist durch einen ausführbaren Programmcode gebildet, wobei der ausführbare Programmcode durch die weitere Netzwerkentität ausführbar ist, und wobei der ausführbare Programmcode die Protokollvorschrift zum Handhaben der Daten repräsentiert.

Dadurch wird der Vorteil erreicht, dass die Protokollvorschrift durch einen Prozessor der weiteren Netzwerkentität unmittelbar realisiert werden kann. Der ausführbare Programmcode kann in maschinen-lesbarer Form zur Ausführung bereitgestellt sein. Der ausführbare Programmcode umfasst einen vorkompilierten Objektcode.

Gemäß einer Ausführungsform ist der Prozessor ausgebildet, den ausführbaren Programmcode und/oder den vorkompilierten Objektcode auf der Basis der Protokollvorschrift zu erzeugen. Dadurch wird der Vorteil erreicht, dass das Protokollobjekt effizient bereitgestellt werden kann.

Gemäß einer Ausführungsform zeigt das Protokollobjekt ferner eine Gültigkeitsdauer des Datenpakets an, wobei die Gültigkeitsdauer einen Zeitraum zum Handhaben der Daten durch die weitere Netzwerkentität anzeigt. Dadurch wird der Vorteil erreicht, dass das Handhaben der Daten durch die weitere Netzwerkentität innerhalb des Zeitraums gewährleistet werden kann.

Gemäß einer Ausführungsform ist der Netzwerkentität ein privater Signaturschlüssel zugeordnet, wobei der Prozessor ausgebildet ist, das Datenpaket auf der Basis des privaten Signaturschlüssels kryptographisch zu signieren. Dadurch wird der Vorteil erreicht, dass die Integrität des Datenpakets, insbesondere des Protokollobjekts, gewährleistet werden kann. Die Signatur kann unter Verwendung einer Public-Key-Infrastruktur erzeugt werden. Gemäß einer Ausführungsform zeigt das Protokollobjekt ferner eine Autorisierung der weiteren Netzwerkentität zum Handhaben der Daten durch die weitere Netzwerkentität an. Dadurch wird der Vorteil erreicht, dass eine Berechtigung zum Handhaben der Daten angezeigt werden kann. Die Autorisierung der weiteren Netzwerkentität zum Handhaben der Daten kann durch die Netzwerkentität erteilt werden. Die Autorisierung der weiteren Netzwerkentität kann beispielsweise unter Verwendung eines Autorisierungsschlüssels oder eines Autorisierungscodes angezeigt werden.

Gemäß einer Ausführungsform umfasst das Handhaben der Daten ein Verarbeiten der Daten oder ein Weiterleiten der Daten über das Kommunikationsnetzwerk. Dadurch wird der Vorteil erreicht, dass die Daten auf verschiedene Weise gehandhabt werden können.

Gemäß einer Ausführungsform ist die Netzwerkentität ein Netzwerkelement, insbesondere ein Router, ein Multiplexer oder ein Server, des Kommunikationsnetzwerkes. Dadurch wird der Vorteil erreicht, dass die Netzwerkentität effizient implementiert werden kann.

Gemäß einem zweiten Aspekt betrifft die Erfindung eine Netzwerkentität zum Handhaben von Daten auf der Basis einer Protokollvorschrift, wobei die Netzwerkentität ausgebildet ist, mit einer weiteren Netzwerkentität über ein Kommunikationsnetzwerk zu kommunizieren. Die Netzwerkentität umfasst eine Kommunikationsschnittstelle, welche ausgebildet ist, ein Datenpaket von der weiteren Netzwerkentität über das Kommunikationsnetzwerk zu empfangen, wobei das Datenpaket die Daten und ein Protokollobjekt umfasst, und wobei das Protokollobjekt die Protokollvorschrift zum Handhaben der Daten anzeigt. Die Netzwerkentität umfasst ferner einen Prozessor, welcher ausgebildet ist, die Protokollvorschrift auf der Basis des Protokollobjekts zu bestimmen, und die Daten auf der Basis der Protokollvorschrift zu handhaben. Dadurch wird der Vorteil erreicht, dass ein effizientes Konzept zum Handhaben von Daten realisiert werden kann.

Die Netzwerkentität gemäß dem ersten Aspekt der Erfindung und die Netzwerkentität gemäß dem zweiten Aspekt der Erfindung können zusammenwirken. Die Netzwerkentität gemäß dem zweiten Aspekt der Erfindung kann die weitere Netzwerkentität gemäß dem ersten Aspekt der Erfindung sein. Die weitere Netzwerkentität gemäß dem zweiten Aspekt der Erfindung kann die Netzwerkentität gemäß dem ersten Aspekt der Erfindung sein.

Das Protokollobjekt umfasst einen ausführbaren Programmcode oder ist durch einen ausführbaren Programmcode gebildet, wobei der ausführbare Programmcode die Protokollvorschrift zum Handhaben der Daten repräsentiert, und wobei der Prozessor ausgebildet ist, den ausführbaren Programmcode auszuführen. Dadurch wird der Vorteil erreicht, dass die Protokollvorschrift durch den Prozessor der Netzwerkentität unmittelbar realisiert werden kann. Der ausführbare Programmcode kann in maschinen-lesbarer Form zur Ausführung bereitgestellt sein.

Der ausführbare Programmcode umfasst einen vorkompilierten Objektcode, wobei der Prozessor ausgebildet ist, den vorkompilierten Objektcode mit vorgespeichertem Objektcode zu linken oder zu binden. Dadurch wird der Vorteil erreicht, dass die Protokollvorschrift durch den Prozessor effizient realisiert werden kann.

Gemäß einer Ausführungsform umfasst die Netzwerkentität einen Speicher, wobei der vorgespeicherte Objektcode in dem Speicher vorgespeichert ist. Dadurch wird der Vorteil erreicht, dass der vorgespeicherte Objektcode effizient bereitgestellt werden kann.

Gemäß einer Ausführungsform ist die Netzwerkentität ausgebildet, eine Laufzeitumgebung zum Ausführen des ausführbaren Programmcodes bereitzustellen, wobei der Prozessor ausgebildet ist, den ausführbaren Programmcode unter Verwendung der Laufzeitumgebung auszuführen. Dadurch wird der Vorteil erreicht, dass eine plattformunabhängige Ausführung des Programmcodes erreicht werden kann. Die Laufzeitumgebung kann vorbestimmte Funktionen mit vorbestimmten Prozeduren, beispielsweise zum Lesen oder Schreiben der Daten, zum Weiterleiten der Daten oder zum Verarbeiten der Daten, bereitstellen.

Gemäß einer Ausführungsform zeigt das Protokollobjekt ferner eine Gültigkeitsdauer des Datenpakets an, wobei die Gültigkeitsdauer einen Zeitraum zum Handhaben der Daten anzeigt, und wobei der Prozessor ausgebildet ist, einen gegenwärtigen Zeitpunkt mit dem Zeitraum zu vergleichen, und die Daten zu handhaben, falls der gegenwärtige Zeitpunkt innerhalb des Zeitraumes liegt. Dadurch wird der Vorteil erreicht, dass das Handhaben der Daten durch die Netzwerkentität innerhalb des Zeitraums gewährleistet werden kann.

Gemäß einer Ausführungsform ist das Datenpaket auf der Basis eines privaten Signaturschlüssels der weiteren Netzwerkentität kryptographisch signiert, wobei der Prozessor ausgebildet ist, die Signatur des Datenpakets auf der Basis eines öffentlichen Signaturprüfschlüssels der weiteren Netzwerkentität zu verifizieren, wobei der private Signaturschlüssel und der öffentliche Signaturprüfschlüssel ein kryptographisches Schlüsselpaar bilden, und wobei der Prozessor ausgebildet ist, die Daten zu handhaben, falls die Signatur des Datenpakets erfolgreich verifiziert ist. Dadurch wird der Vorteil erreicht, dass die Integrität des Datenpakets, insbesondere des Protokollobjekts, gewährleistet sein kann. Die Signatur kann unter Verwendung einer Public-Key-Infrastruktur verifiziert werden.

Gemäß einer Ausführungsform zeigt das Protokollobjekt ferner eine Autorisierung der Netzwerkentität zum Handhaben der Daten durch die Netzwerkentität an, wobei der Prozessor ausgebildet ist, die Autorisierung der Netzwerkentität zu verifizieren, und wobei der Prozessor ferner ausgebildet ist, die Daten zu handhaben, falls die Autorisierung erfolgreich verifiziert ist. Dadurch wird der Vorteil erreicht, dass die Daten durch die Netzwerkentität nur dann gehandhabt werden, wenn die Netzwerkentität zum Handhaben der Daten berechtigt ist. Die Autorisierung der Netzwerkentität zum Handhaben der Daten kann durch die weitere Netzwerkentität erteilt werden. Die Autorisierung der Netzwerkentität kann beispielsweise unter Verwendung eines Autorisierungsschlüssels oder eines Autorisierungscodes verifiziert werden.

Gemäß einer Ausführungsform umfasst das Handhaben der Daten ein Verarbeiten der Daten oder ein Weiterleiten der Daten über das Kommunikationsnetzwerk. Dadurch wird der Vorteil erreicht, dass die Daten auf verschiedene Weise gehandhabt werden können. Gemäß einer Ausführungsform ist die Netzwerkentität ein Netzwerkelement, insbesondere ein Router, ein Multiplexer oder ein Server, des Kommunikationsnetzwerkes. Dadurch wird der Vorteil erreicht, dass die Netzwerkentität effizient implementiert werden kann.

Gemäß einem dritten Aspekt betrifft die Erfindung ein Kommunikationssystem, mit einer Netzwerkentität nach dem ersten Aspekt der Erfindung, und einer weiteren Netzwerkentität nach dem zweiten Aspekt der Erfindung. Die Netzwerkentität ist ausgebildet, mit der weiteren Netzwerkentität über ein Kommunikationsnetzwerk zu kommunizieren. Die weitere Netzwerkentität ist ausgebildet, Daten auf der Basis einer Protokollvorschrift zu handhaben. Dadurch wird der Vorteil erreicht, dass ein effizientes Konzept zum Handhaben von Daten realisiert werden kann.

Gemäß einer Ausführungsform ist das Kommunikationsnetzwerk ein Kommunikationsnetzwerk der fünften Generation (5G) oder einer weiteren Generation, wobei die Netzwerkentität und die weitere Netzwerkentität einem Subnetzwerk, insbesondere einem Slice, des Kommunikationsnetzwerkes zugeordnet sind. Dadurch wird der Vorteil erreicht, dass eine effiziente Handhabung der Daten über ein Kommunikationsnetzwerk der fünften Generation (5G) oder einer weiteren Generation realisiert werden kann. Gemäß einem vierten Aspekt betrifft die Erfindung ein Verfahren zum Kommunizieren einer

Netzwerkentität mit einer weiteren Netzwerkentität über ein Kommunikationsnetzwerk nach Anspruch 12.

Das Verfahren kann durch die Netzwerkentität nach dem ersten Aspekt der Erfindung ausgeführt werden. Weitere Merkmale des Verfahrens resultieren unmittelbar aus der Funktionalität und/oder den Merkmalen der Netzwerkentität nach dem ersten Aspekt der Erfindung.

Gemäß einem fünften Aspekt betrifft die Erfindung ein Verfahren zum Handhaben von Daten auf der Basis einer Protokollvorschrift unter Verwendung einer Netzwerkentität nach Anspruch 13.

Das Verfahren kann durch die Netzwerkentität nach dem zweiten Aspekt der Erfindung ausgeführt werden. Weitere Merkmale des Verfahrens resultieren unmittelbar aus der Funktionalität und/oder den Merkmalen der Netzwerkentität nach dem zweiten Aspekt der Erfindung.

Gemäß einem sechsten Aspekt betrifft die Erfindung ein Computerprogramm zum Ausführen des Verfahrens nach dem vierten Aspekt der Erfindung oder des Verfahrens nach dem fünften Aspekt der Erfindung, wenn das Computerprogramm auf einem Computer ausgeführt wird. Dadurch wird der Vorteil erreicht, dass die Verfahren automatisiert ausgeführt werden können. Die Netzwerkentität nach dem ersten Aspekt der Erfindung und/oder die Netzwerkentität nach dem zweiten Aspekt der Erfindung können programmtechnisch eingerichtet sein, um den Programmcode auszuführen.

Die Erfindung kann in Hardware und/oder in Software realisiert werden.

### BESCHREIBUNG DER FIGUREN

Weitere Ausführungsbeispiele werden bezugnehmend auf die beiliegenden Zeichnungen näher erläutert. Es zeigen:
Fig. 1 ein schematisches Diagramm einer Netzwerkentität zum Kommunizieren mit einer weiteren Netzwerkentität über ein Kommunikationsnetzwerk;
Fig. 2 ein schematisches Diagramm einer Netzwerkentität zum Handhaben von Daten auf der Basis einer Protokollvorschrift;
Fig. 3 ein schematisches Diagramm eines Kommunikationssystems mit einer Netzwerkentität und einer weiteren Netzwerkentität;
Fig. 4 ein schematisches Diagramm eines Verfahrens zum Kommunizieren einer Netzwerkentität mit einer weiteren Netzwerkentität über ein Kommunikationsnetzwerk;
Fig. 5 ein schematisches Diagramm eines Verfahrens zum Handhaben von Daten auf der Basis einer Protokollvorschrift unter Verwendung einer Netzwerkentität;
Fig. 6 ein schematisches Diagramm eines Kommunikationssystems mit einer Netzwerkentität und einer weiteren Netzwerkentität;
Fig. 7 ein schematisches Diagramm eines Kommunikationssystems mit einer Netzwerkentität und einer weiteren Netzwerkentität; und
Fig. 8 ein schematisches Diagramm eines Kommunikationssystems mit einer Netzwerkentität und einer weiteren Netzwerkentität.

### DETAILIERTE BESCHREIBUNG DER FIGUREN

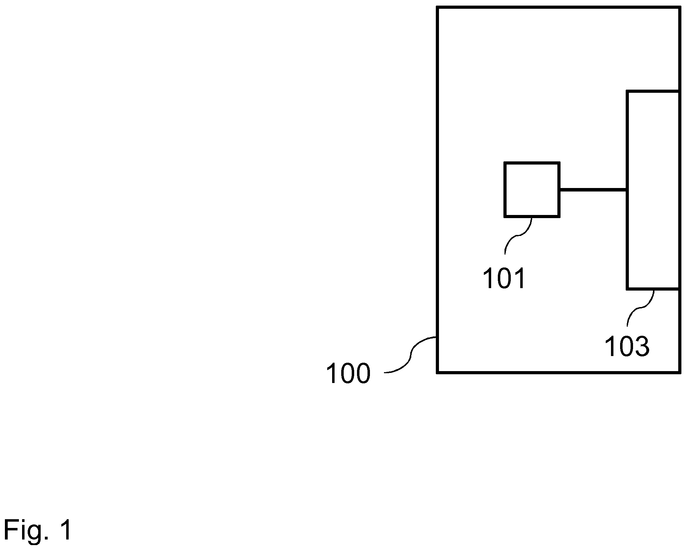

Fig. 1 zeigt ein schematisches Diagramm einer Netzwerkentität 100 zum Kommunizieren mit einer weiteren Netzwerkentität über ein Kommunikationsnetzwerk.

Die Netzwerkentität 100 umfasst einen Prozessor 101, welcher ausgebildet ist, Daten bereitzustellen und ein Protokollobjekt zu erzeugen, wobei das Protokollobjekt eine Protokollvorschrift zum Handhaben der Daten durch die weitere Netzwerkentität anzeigt. Der Prozessor 101 ist ferner ausgebildet, die Daten mit dem Protokollobjekt zu verknüpfen, und ein Datenpaket zu erzeugen, wobei das Datenpaket die Daten und das Protokollobjekt umfasst. Die Netzwerkentität 100 umfasst ferner eine Kommunikationsschnittstelle 103, welche ausgebildet ist, das Datenpaket an die weitere Netzwerkentität über das Kommunikationsnetzwerk auszusenden.

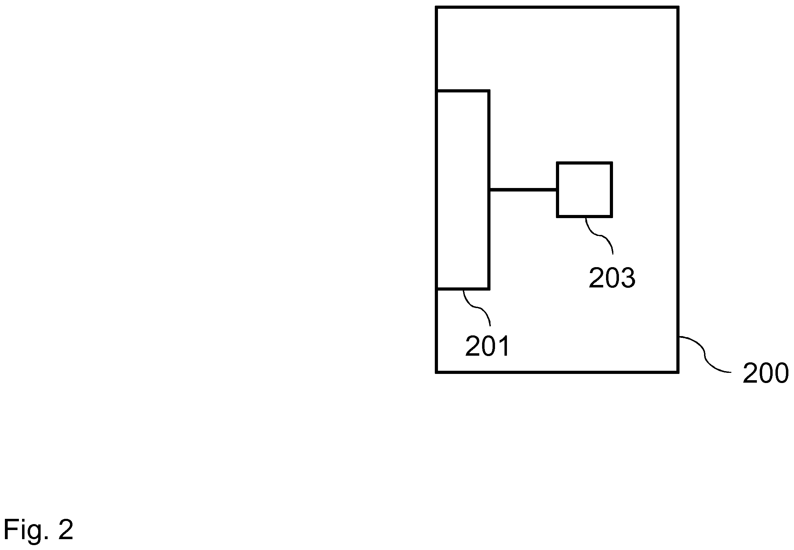

Fig. 2 zeigt ein schematisches Diagramm einer Netzwerkentität 200 zum Handhaben von Daten auf der Basis einer Protokollvorschrift. Die Netzwerkentität 200 ist ausgebildet, mit einer weiteren Netzwerkentität über ein Kommunikationsnetzwerk zu kommunizieren.

Die Netzwerkentität 200 umfasst eine Kommunikationsschnittstelle 201, welche ausgebildet ist, ein Datenpaket von der weiteren Netzwerkentität über das Kommunikationsnetzwerk zu empfangen, wobei das Datenpaket die Daten und ein Protokollobjekt umfasst, und wobei das Protokollobjekt die Protokollvorschrift zum Handhaben der Daten anzeigt. Die Netzwerkentität 200 umfasst ferner einen Prozessor 203, welcher ausgebildet ist, die Protokollvorschrift auf der Basis des Protokollobjekts zu bestimmen, und die Daten auf der Basis der Protokollvorschrift zu handhaben.

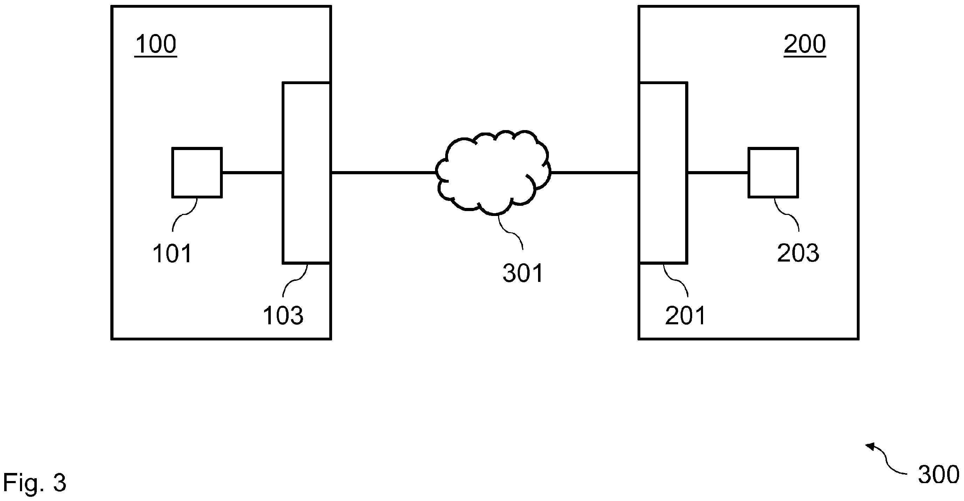

Fig. 3 zeigt ein schematisches Diagramm eines Kommunikationssystems 300 mit einer Netzwerkentität 100 und einer weiteren Netzwerkentität 200. Die Netzwerkentität 100 ist ausgebildet, mit der weiteren Netzwerkentität 200 über ein Kommunikationsnetzwerk 301 zu kommunizieren. Die weitere Netzwerkentität 200 ist ausgebildet, Daten auf der Basis einer Protokollvorschrift zu handhaben.

Die Netzwerkentität 100 umfasst einen Prozessor 101, welcher ausgebildet ist, die Daten bereitzustellen und ein Protokollobjekt zu erzeugen, wobei das Protokollobjekt die Protokollvorschrift zum Handhaben der Daten durch die weitere Netzwerkentität 200 anzeigt. Der Prozessor 101 ist ferner ausgebildet, die Daten mit dem Protokollobjekt zu verknüpfen, und ein Datenpaket zu erzeugen, wobei das Datenpaket die Daten und das Protokollobjekt umfasst. Die Netzwerkentität 100 umfasst ferner eine Kommunikationsschnittstelle 103, welche ausgebildet ist, das Datenpaket an die weitere Netzwerkentität 200 über das Kommunikationsnetzwerk 301 auszusenden.

Die weitere Netzwerkentität 200 umfasst eine Kommunikationsschnittstelle 201, welche ausgebildet ist, das Datenpaket von der Netzwerkentität 100 über das Kommunikationsnetzwerk 301 zu empfangen, wobei das Datenpaket die Daten und das Protokollobjekt umfasst, und wobei das Protokollobjekt die Protokollvorschrift zum Handhaben der Daten anzeigt. Die weitere Netzwerkentität 200 umfasst ferner einen Prozessor 203, welcher ausgebildet ist, die Protokollvorschrift auf der Basis des Protokollobjekts zu bestimmen, und die Daten auf der Basis der Protokollvorschrift zu handhaben.

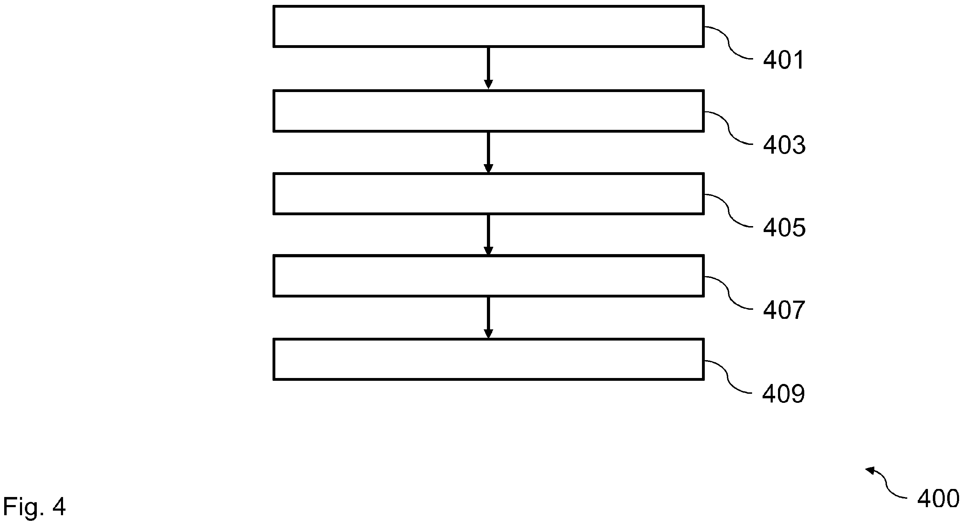

Fig. 4 zeigt ein schematisches Diagramm eines Verfahrens 400 zum Kommunizieren einer Netzwerkentität mit einer weiteren Netzwerkentität über ein Kommunikationsnetzwerk. Die Netzwerkentität umfasst einen Prozessor und eine Kommunikationsschnittstelle.

Das Verfahren 400 umfasst ein Bereitstellen 401 von Daten durch den Prozessor, ein Erzeugen 403 eines Protokollobjekts durch den Prozessor, wobei das Protokollobjekt eine Protokollvorschrift zum Handhaben der Daten durch die weitere Netzwerkentität anzeigt, ein Verknüpfen 405 der Daten mit dem Protokollobjekt durch den Prozessor, ein Erzeugen 407 eines Datenpakets durch den Prozessor, wobei das Datenpaket die Daten und das Protokollobjekt umfasst, und ein Aussenden 409 des Datenpakets an die weitere Netzwerkentität über das Kommunikationsnetzwerk durch die Kommunikationsschnittstelle.

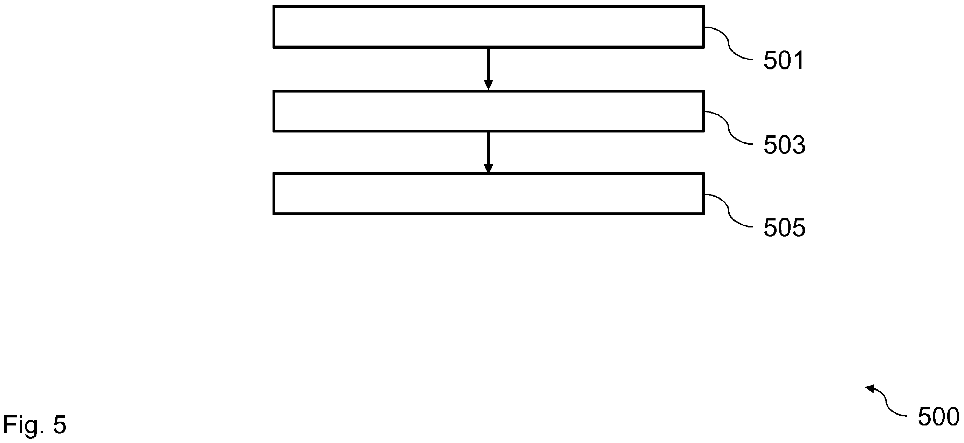

Fig. 5 zeigt ein schematisches Diagramm eines Verfahrens 500 zum Handhaben von Daten auf der Basis einer Protokollvorschrift unter Verwendung einer Netzwerkentität. Die Netzwerkentität ist ausgebildet, mit einer weiteren Netzwerkentität über ein Kommunikationsnetzwerk zu kommunizieren. Die Netzwerkentität umfasst eine Kommunikationsschnittstelle und einen Prozessor.

Das Verfahren 500 umfasst ein Empfangen 501 eines Datenpakets von der weiteren Netzwerkentität über das Kommunikationsnetzwerk durch die Kommunikationsschnittstelle, wobei das Datenpaket die Daten und ein Protokollobjekt umfasst, wobei das Protokollobjekt die Protokollvorschrift zum Handhaben der Daten anzeigt, ein Bestimmen 503 der Protokollvorschrift auf der Basis des Protokollobjekts durch den Prozessor, und ein Handhaben 505 der Daten auf der Basis der Protokollvorschrift durch den Prozessor.

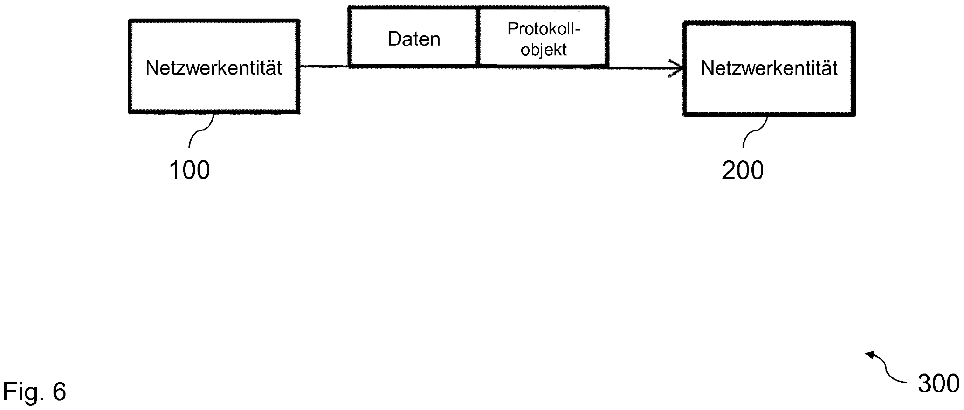

Fig. 6 zeigt ein schematisches Diagramm eines Kommunikationssystems 300 mit einer Netzwerkentität 100 und einer weiteren Netzwerkentität 200. Ein Datenpaket mit Daten und einem Protokollobjekt wird von der Netzwerkentität 100 an die weitere Netzwerkentität 200 übertragen. Mithin kann ein objektorientiertes Protokoll eingesetzt werden. Dabei kann eine Orientierung an abstrakten Objekten erfolgen.

Ein Datenpaket mit einem Protokollobjekt umfasst dabei:
i.) Daten, die übertragen werden sollen, und gleichzeitig
ii.) eine Protokollvorschrift, welche beispielsweise anzeigt, welches Netzwerkelement wie, wie lange und unter welchen Voraussetzungen die Daten nach Empfang zu handhaben hat. Ferner kann eine Autorisierung zum Handhaben der Daten angezeigt werden.

Anstatt also vorab in einer spezifizierten Protokollvorschrift, einer Spezifikation oder einer Vereinbarung zu definieren, wie die Daten des Datenpakets zu interpretieren sind und was mit den Daten nach Empfang zu geschehen hat, kann beides kombiniert und in Form eines Datenpaketes gemeinsam übertragen werden.

Nach Empfang eines Datenpaketes mit Protokollobjekt können dann beispielsweise:
i.) ein Programmcode des Protokollobjekts in einer lokalen Laufzeitumgebung der weiteren Netzwerkentität 200 zur Ausführung geladen werden, und
ii.) die Prozeduren des Programmcodes auf die Daten, die ebenfalls mit dem Datenpaket übertragen wurden, angewendet werden.

Diese Vorgehensweise hat beispielsweise den Vorteil, dass detaillierte Prozeduren nicht mehr vorab allumfassend beschreiben werden müssen. Je nach Ausführungsform der Netzwerkentität 200, beispielsweise als Netzwerkelement, können unterschiedliche Funktionen zur Verfügung stehen.

Das Protokollobjekt kann dabei auf verschiedene Weise mit bereitgestellten Funktionen der Netzwerkentität 200 interagieren.

Ein Router als Netzwerkentität 200, welcher beispielsweise nur Daten von einem physikalischen Port zu einem anderen physikalischen Port transportieren kann, könnte beispielsweise nur diese Funktion dem Protokollobjekt zur Verfügung stellen. Von welchem physikalischen Port zu welchem anderen physikalischen Port weitergeleitet oder geroutet werden würden, könnte dann beispielsweise durch den Programmcode, welcher mit dem Protokollobjekt übertragen werden kann, bestimmt werden.

Ein Sendeempfänger als Netzwerkentität 200, beispielsweise eine Base Transceiver Station (BTS), könnte beispielsweise Funktionen zur Verfügung stellen, welche ein Senden, ein Empfangen und/oder das erfindungsgemäße Speichern der Daten in einer Warteschlange erlauben. Der Programmcode, welcher neben den zu übertragenden Daten mit dem Protokollobjekt übertragen werden kann, kann in diesem Fall beispielsweise einen Programmcode umfassen, welcher eine Sende-Empfangs-Einheit und/oder erfindungsgemäß die Warteschlange anspricht.

Auch andere Funktionen, beispielsweise eines Mobilfunkkommunikationsnetzwerks, wie beispielsweise die erfindungsgemäße Konfiguration von Daten, welche auf Broadcastkanälen zu signalisieren sind, beispielsweise die Netzbetreiberkennung, die Zellidentifikation (engl. Cell ID), die Ortsidentifikation (engl. Location ID) und/oder Beschränkungen (engl. Restrictions), können durch ein Protokollobjekt angesprochen werden. Durch derartige Protokollobjekte können Kommunikationsnetzwerke sehr dynamisch umkonfiguriert werden.

Das Protokollobjekt kann ferner auf verschiedene Weise mit anderen Protokollobjekten interagieren.

Neben der Interaktion des Protokollobjekts mit Funktionen der Netzwerkentität 200, kann es beispielsweise vorteilhaft sein, Mechanismen im Kontext von Protokollobjekten zu definieren, welche eine Interaktion von Protokollobjekten untereinander beschreiben und/oder deren Rechte definieren.

Beispielsweise können einem Protokollobjekt eigene Funktionen zur Authentifizierung, Autorisierung und Abrechnung (engl. Authentication, Authorization, Accounting, AAA) zugewiesen werden, d.h. das Protokollobjekt kann eigene derartige Funktionen aufweisen. Ferner können einem Protokollobjekt Sicherheitsfunktionen, beispielsweise unter Verwendung einer kryptographischen Signatur, und Rechte zugewiesen sein. Um Laufzeiten und/oder Verarbeitungsverzögerungen auszugleichen, kann es zudem vorteilhaft sein, einem Datenpaket oder einem Protokollobjekt eine Gültigkeitsdauer zuzuweisen. Die Gültigkeitsdauer kann dann durch die Netzwerkentität 200 je nach Programmcode des Protokollobjekts bestimmt und berücksichtigt werden.

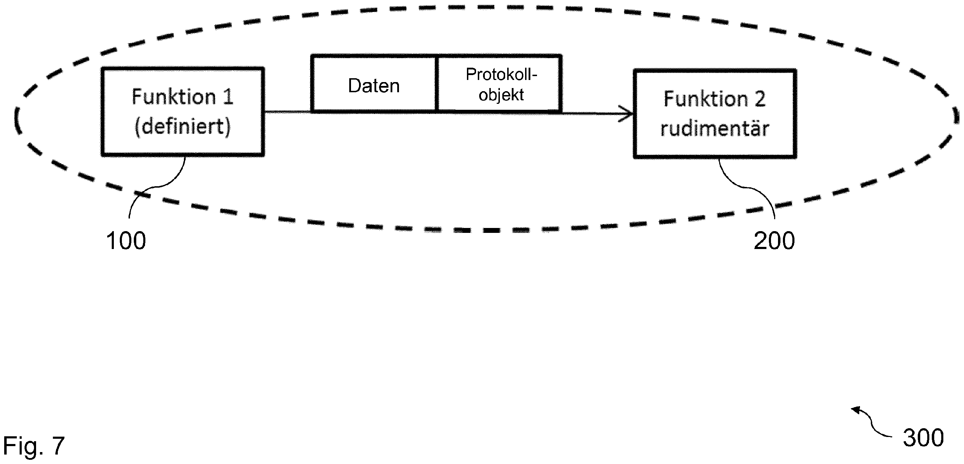

Fig. 7 zeigt ein schematisches Diagramm eines Kommunikationssystems 300 mit einer Netzwerkentität 100 und einer weiteren Netzwerkentität 200. Ein Datenpaket mit Daten und einem Protokollobjekt wird von der Netzwerkentität 100 an die weitere Netzwerkentität 200 übertragen. Die Netzwerkentität 100 stellt eine erste Funktion in definierter Form bereit. Die weitere Netzwerkentität 200 stellt eine zweite Funktion in rudimentärer Form bereit.

Das Kommunikationssystem 300 kann in einem Kommunikationsnetzwerk der fünften Generation (5G) oder einer weiteren Generation Anwendung finden. Das Übertragen eines Protokollobjektes vereinfacht dabei entscheidend die Konfiguration von Funktionen eines Subnetzwerkes, beispielsweise einer Slice, des Kommunikationsnetzwerkes sowie die Zusammensetzung des Subnetzwerkes.

So kann beispielsweise eine Funktion rudimentär, sozusagen auf Vorrat, zur Verfügung gestellt werden. Mittels des Protokollobjekts können dann beispielsweise datenverkehrsspezifischen Funktionen implementiert werden, ohne dass eine übergeordnete Instanz, wie beispielsweise ein Netzwerk-Orchestrierer, eingreifen muss. Die zweite Funktion kann ausgehend von der rudimentären Implementierung durch das Protokollobjekt realisiert werden. Auf diese Weise kann eine dynamische Funktionsanpassung, beispielsweise des Funktionsumfangs oder des Routings, an den Datenverkehr vorgenommen werden.

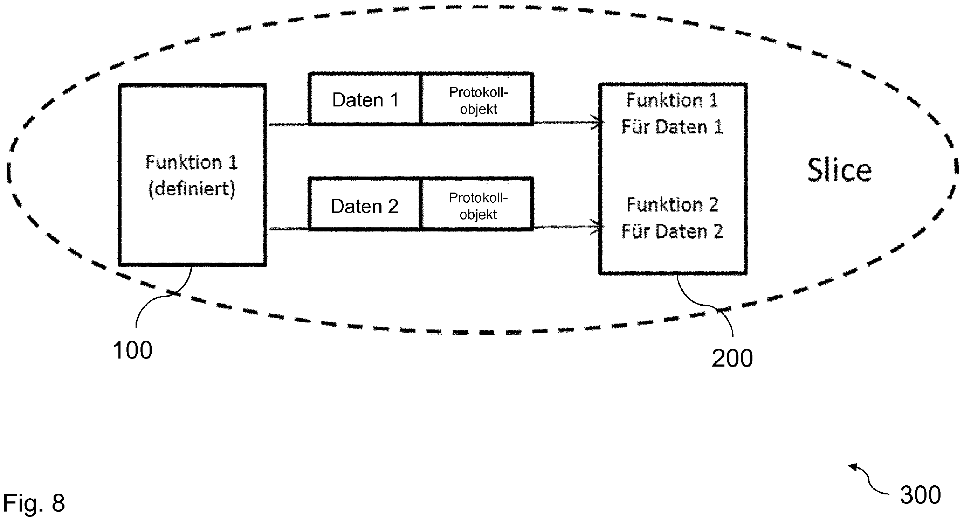

Fig. 8 zeigt ein schematisches Diagramm eines Kommunikationssystems 300 mit einer Netzwerkentität 100 und einer weiteren Netzwerkentität 200. Ein erstes Datenpaket mit ersten Daten und einem ersten Protokollobjekt wird von der Netzwerkentität 100 an die weitere Netzwerkentität 200 übertragen. Ferner wird ein zweites Datenpaket mit zweiten Daten und einem zweiten Protokollobjekt von der Netzwerkentität 100 an die weitere Netzwerkentität 200 übertragen. Die Netzwerkentität 100 stellt eine erste Funktion in definierter Form bereit. Die weitere Netzwerkentität 200 stellt eine erste Funktion für die ersten Daten und eine zweite Funktion für die zweiten Daten bereit. Das Kommunikationssystem 300 kann einem Subnetzwerk, insbesondere einem Slice, zugeordnet sein.

Ausgehend von diesem Konzept ist es beispielsweise möglich, einer Netzwerkentität innerhalb einer Slice dynamisch unterschiedliche Funktionen zuzuweisen. Auf diese Weise können beispielsweise unterschiedlichen Nutzern unterschiedliche Dienste oder unterschiedliche Dienstqualitäten innerhalb derselben Slice zugewiesen werden.

### BEZUGSZEICHENLISTE

- 100: Netzwerkentität
- 101: Prozessor
- 103: Kommunikationsschnittstelle

- 200: Netzwerkentität
- 201: Kommunikationsschnittstelle
- 203: Prozessor

- 300: Kommunikationssystem
- 301: Kommunikationsnetzwerk

- 400: Verfahren zum Kommunizieren
- 401: Bereitstellen
- 403: Erzeugen
- 405: Verknüpfen
- 407: Erzeugen
- 409: Aussenden

- 500: Verfahren zum Handhaben von Daten
- 501: Empfangen
- 503: Bestimmen
- 505: Handhaben

## Patentansprüche

1. Netzwerkentität (100) zum Kommunizieren mit einer weiteren Netzwerkentität (200) über ein Kommunikationsnetzwerk (301), mit:
einem Prozessor (101), welcher ausgebildet ist, Daten bereitzustellen und ein Protokollobjekt zu erzeugen, wobei das Protokollobjekt eine Protokollvorschrift zum Handhaben der Daten durch die weitere Netzwerkentität (200) anzeigt, wobei das Protokollobjekt einen ausführbaren Programmcode umfasst, wobei der ausführbare Programmcode durch die weitere Netzwerkentität (200) ausführbar ist, wobei der Prozessor (101) ferner ausgebildet ist ein Datenpaket zu erzeugen, wobei das Datenpaket die Daten und das Protokollobjekt umfasst, wobei der ausführbare Programmcode einen vorkompilierten Objektcode umfasst; und
einer Kommunikationsschnittstelle (103), welche ausgebildet ist, das Datenpaket an die weitere Netzwerkentität (200) über das Kommunikationsnetzwerk (301) auszusenden;
wobei der ausführbare Programmcode die Protokollvorschrift zum Handhaben der Daten repräsentiert, wobei der Prozessor (101) ferner ausgebildet ist die Daten mit dem Protokollobjekt zu verknüpfen, den ausführbaren Programmcode und den vorkompilierten Objektcode auf der Basis der Protokollvorschrift zu erzeugen,
wobei das Protokollobjekt eingerichtet ist um auf verschiedene Weise mit bereitgestellten Funktionen der weiteren Netzwerkentität (200) zu interagieren,
**dadurch gekennzeichnet,**
**dass** dass die bereitgestellten Funktionen der Netzwerkentität (200) eine Funktion umfassen, die ein Speichern der Daten in einer Warteschlange erlaubt und/oder dass die bereitgestellten Funktionen der Netzwerkentität (200) eine Funktion in einem Mobilfunkkommunikationsnetzwerk umfassen, welche die Konfiguration von Daten, die auf Broadcastkanälen zu signalisieren sind, erlaubt, nämlich eine Netzbetreiberkennung und/oder eine Zellindentifikation und/oder eine Ortsidentifikation und/oder eine Beschränkung.

2. Netzwerkentität (100) nach Anspruch 1, wobei das Protokollobjekt ferner eine Gültigkeitsdauer des Datenpakets anzeigt, wobei die Gültigkeitsdauer einen Zeitraum zum Handhaben der Daten durch die weitere Netzwerkentität (200) anzeigt.

3. Netzwerkentität (100) nach einem der vorstehenden Ansprüche, wobei der Netzwerkentität (100) ein privater Signaturschlüssel zugeordnet ist, wobei der Prozessor (101) ausgebildet ist, das Datenpaket auf der Basis des privaten Signaturschlüssels kryptographisch zu signieren.

4. Netzwerkentität (100) nach einem der vorstehenden Ansprüche, wobei das Protokollobjekt ferner eine Autorisierung der weiteren Netzwerkentität (200) zum Handhaben der Daten durch die weitere Netzwerkentität (200) anzeigt.

5. Netzwerkentität (200) zum Handhaben von Daten auf der Basis einer Protokollvorschrift, wobei die Netzwerkentität (200) ausgebildet ist, mit einer weiteren Netzwerkentität (100) über ein Kommunikationsnetzwerk (301) zu kommunizieren, mit:
einer Kommunikationsschnittstelle (201), welche ausgebildet ist, ein Datenpaket von der weiteren Netzwerkentität (100) über das Kommunikationsnetzwerk (301) zu empfangen, wobei das Datenpaket die Daten und ein Protokollobjekt umfasst, wobei das Protokollobjekt die Protokollvorschrift zum Handhaben der Daten anzeigt, wobei das Protokollobjekt einen ausführbaren Programmcode umfasst; und
einem Prozessor (203), welcher ausgebildet ist, die Protokollvorschrift auf der Basis des Protokollobjekts zu bestimmen, den ausführbaren Programmcode auszuführen, und die Daten auf der Basis der Protokollvorschrift zu handhaben;
wobei ausführbare Programmcode die Protokollvorschrift zum Handhaben der Daten repräsentiert und dass
der ausführbare Programmcode einen vorkompilierten Objektcode umfasst, wobei der Prozessor (203) ferner ausgebildet ist, den vorkompilierten Objektcode mit vorgespeichertem Objektcode zu linken, wobei die Netzwerkentität (200) Funktionen bereitstellt mit denen das Protokollobjekt auf verschiedene Weise interagieren kann,
**dadurch gekennzeichnet, dass** die bereitgestellten Funktionen der Netzwerkentität (200) eine Funktion umfassen, die ein Speichern der Daten in einer Warteschlange erlaubt und/oder dass die bereitgestellten Funktionen der Netzwerkentität (200) eine Funktion in einem Mobilfunkkommunikationsnetzwerk umfassen, welche die Konfiguration von Daten die auf Broadcastkanälen zu signalisieren sind, erlaubt, nämlich eine Netzbetreiberkennung und/oder eine Zellindentifikation und/oder eine Ortsidentifikation und/oder eine Beschränkung.

6. Netzwerkentität (200) nach Anspruch 5, wobei die Netzwerkentität (200) ausgebildet ist, eine Laufzeitumgebung zum Ausführen des ausführbaren Programmcodes bereitzustellen, und wobei der Prozessor (203) ausgebildet ist, den ausführbaren Programmcode unter Verwendung der Laufzeitumgebung auszuführen.

7. Netzwerkentität (200) nach einem der Ansprüche 5 oder 6, wobei das Protokollobjekt ferner eine Gültigkeitsdauer des Datenpakets anzeigt, wobei die Gültigkeitsdauer einen Zeitraum zum Handhaben der Daten anzeigt, und wobei der Prozessor (203) ausgebildet ist, einen gegenwärtigen Zeitpunkt mit dem Zeitraum zu vergleichen, und die Daten zu handhaben, falls der gegenwärtige Zeitpunkt innerhalb des Zeitraumes liegt.

8. Netzwerkentität (200) nach einem der Ansprüche 5 bis 7, wobei das Datenpaket auf der Basis eines privaten Signaturschlüssels der weiteren Netzwerkentität (100) kryptographisch signiert ist, wobei der Prozessor (203) ausgebildet ist, die Signatur des Datenpakets auf der Basis eines öffentlichen Signaturprüfschlüssels der weiteren Netzwerkentität (100) zu verifizieren, wobei der private Signaturschlüssel und der öffentliche Signaturprüfschlüssel ein kryptographisches Schlüsselpaar bilden, und wobei der Prozessor (203) ausgebildet ist, die Daten zu handhaben, falls die Signatur des Datenpakets erfolgreich verifiziert ist.

9. Netzwerkentität (200) nach einem der Ansprüche 5 bis 8, wobei das Protokollobjekt ferner eine Autorisierung der Netzwerkentität (200) zum Handhaben der Daten durch die Netzwerkentität (200) anzeigt, wobei der Prozessor (203) ausgebildet ist, die Autorisierung der Netzwerkentität (200) zu verifizieren, und wobei der Prozessor (203) ferner ausgebildet ist, die Daten zu handhaben, falls die Autorisierung erfolgreich verifiziert ist.

10. Netzwerkentität (200) nach einem der Ansprüche 5 bis 9, wobei das Handhaben der Daten ein Verarbeiten der Daten oder ein Weiterleiten der Daten über das Kommunikationsnetzwerk (301) umfasst.

11. Kommunikationssystem (300), mit:
einer Netzwerkentität (100) nach einem der Ansprüche 1 bis 4; und
einer weiteren Netzwerkentität (200) nach einem der Ansprüche 5 bis 10; wobei die Netzwerkentität (100) ausgebildet ist, mit der weiteren Netzwerkentität (200) über ein Kommunikationsnetzwerk (301) zu kommunizieren, und wobei die weitere Netzwerkentität (200) ausgebildet ist, Daten auf der Basis einer Protokollvorschrift zu handhaben.

12. Verfahren (400) zum Kommunizieren einer Netzwerkentität (100) mit einer weiteren Netzwerkentität (200) über ein Kommunikationsnetzwerk (301), wobei die Netzwerkentität (100) einen Prozessor (101) und eine Kommunikationsschnittstelle (103) umfasst, mit:
Bereitstellen (401) von Daten durch den Prozessor (101);
Erzeugen (403) eines Protokollobjekts durch den Prozessor (101), wobei das Protokollobjekt eine Protokollvorschrift zum Handhaben der Daten durch die weitere Netzwerkentität (200) anzeigt, wobei das Protokollobjekt einen ausführbaren Programmcode umfasst, wobei der ausführbare Programmcode durch die weitere Netzwerkentität (200) ausführbar ist;
Verknüpfen (405) der Daten mit dem Protokollobjekt durch den Prozessor (101);
Erzeugen (407) eines Datenpakets durch den Prozessor (101), wobei das Datenpaket die Daten und das Protokollobjekt umfasst; und
Aussendens (409) des Datenpakets an die weitere Netzwerkentität (200) über das Kommunikationsnetzwerk (301) durch die Kommunikationsschnittstelle (103);
Repräsentieren der Protokollvorschrift zum Handhaben der Daten in dem ausführbaren Programmcode,
Erzeugen des ausführbaren Programmcodes und vorkompilierten Objektcodes auf der Basis der Protokollvorschrift durch den Prozessor (101), wobei der ausführbare Programmcode den vorkompilierten Objektcode umfasst,
wobei das Protokollobjekt auf verschiedene Weise mit bereitgestellten Funktionen der weiteren Netzwerkentität (200) interagiert,
**dadurch gekennzeichnet,**
**dass** das Protokollobjekt eine Funktion der weiteren Netzwerkentität (200) anspricht, welche ein Speichern der Daten in einer Warteschlange erlaubt und/oder dass das Protokollobjekt eine Funktion der weiteren Netzwerkentität (200) anspricht, welche in einem Mobilfunkkommunikationsnetzwerk die Konfiguration von Daten erlaubt, die auf Broadcastkanälen zu signalisieren sind, nämlich einer Netzbetreiberkennung und/oder einer Zellindentifikation und/oder einer Ortsidentifikation und/oder einer Beschränkung.

13. Verfahren (500) zum Handhaben von Daten auf der Basis einer Protokollvorschrift unter Verwendung einer Netzwerkentität (200), wobei die Netzwerkentität (200) ausgebildet ist, mit einer weiteren Netzwerkentität (100) über ein Kommunikationsnetzwerk (301) zu kommunizieren, und wobei die Netzwerkentität (200) eine Kommunikationsschnittstelle (201) und einen Prozessor (203) umfasst, mit:
Empfangen (501) eines Datenpakets von der weiteren Netzwerkentität (100) über das Kommunikationsnetzwerk (301) durch die Kommunikationsschnittstelle (201), wobei das Datenpaket die Daten und ein Protokollobjekt umfasst, wobei das Protokollobjekt die Protokollvorschrift zum Handhaben der Daten anzeigt, wobei das Protokollobjekt einen ausführbaren Programmcode umfasst;
Bestimmen (503) der Protokollvorschrift auf der Basis des Protokollobjekts durch den Prozessor (203);
Ausführen des ausführbaren Programmcodes durch den Prozessor (203); und
Handhaben (505) der Daten auf der Basis der Protokollvorschrift durch den Prozessor (203);
Repräsentieren der Protokollvorschrift zum Handhaben der Daten in dem ausführbaren Programmcode,
Linken von vorkompiliertem Objektcode mit vorgespeichertem Objektcode durch den Prozessor (203), wobei der ausführbare Programmcode den vorkompilierten Objektcode umfasst,
wobei das Protokollobjekt auf verschiedene Weise mit bereitgestellten Funktionen der weitere Netzwerkentität (200) interagiert,
**dadurch gekennzeichnet,**
**dass** das Protokollobjekt einen Programmcode umfasst, der eine Funktion der Netzwerkentität (200) anspricht, welche ein Speichern der Daten in einer Warteschlange erlaubt und/oder dass das Protokollobjekt eine Funktion der Netzwerkentität (200) anspricht, welche in einem Mobilfunkkommunikationsnetzwerk die Konfiguration von Daten erlaubt, die auf Broadcastkanälen zu signalisieren sind, nämlich einer Netzbetreiberkennung und/oder einer Zellindentifikation und/oder einer Ortsidentifikation und/oder einer Beschränkung.

14. Computerprogramm zum Ausführen des Verfahrens (400) nach Anspruch 12 oder des Verfahrens (500) nach Anspruch 13, wenn das Computerprogramm auf einem Computer ausgeführt wird.

## Claims

1. Network entity (100) for communicating with another network entity (200) via a communication network (301), with
a processor (101) that is designed to provide data and to generate a protocol object, wherein the protocol object displays a protocol specification for handling the data by the other network entity (200), wherein the protocol object comprises an executable program code, wherein the executable program code is executable by the other network entity (200), wherein the processor (101) is further designed to generate a data packet, wherein the data packet comprises the data and the protocol object, wherein the executable program code comprises a precompiled object code, and
a communication interface (103) which is designed to transmit the data packet to the other network entity (200) via the communication network (301),
wherein the executable program code represents the protocol specification for handling the data, wherein the processor (101) is further designed to link the data to the protocol object, to generate the executable program code and the precompile object code on the basis of the protocol specification,
wherein the protocol object is set up to interact in various ways with supplied functions of the other network entity (200),
**characterized in that**
the supplied functions of the network entity (200) include a function that allows storage of the data in a queue, and/or that the supplied functions of the network entity (200) include a function in a mobile wireless communication network that allows the configuration of data that are to be signalled on broadcast channels, in particular a network operator identifier and/or a cell identification and/or a location identification and/or a limitation.

2. Network entity (100) according to Claim 1, wherein the protocol object further displays a validity period of the data packet, wherein the validity period displays a period for handling the data by the other network entity (200).

3. Network entity (100) according to one of the preceding claims, wherein a private signature key is assigned to the network entity (100), wherein the processor (101) is designed to sign the data packet cryptographically on the basis of the private signature key.

4. Network entity (100) according to any one of the preceding claims, wherein the protocol object further displays an authorisation of the other network entity (200) for handling the data by the other network entity (200) .

5. Network entity (200) for handling data on the basis of a protocol specification, wherein the network entity (200) is designed to communicate with another network entity (100) via a communication network (301), having:
a communication interface (201) which is designed to receive a data packet from the other network entity (100) via the communication network (301), wherein the data packet comprises the data and a protocol object, wherein the protocol object displays the protocol specification for handling of the data, wherein the protocol object comprises an executable program code; and having a processor (203) which is designed to determine the protocol specification on the basis of the protocol object, to execute the executable program code, and to handle the data on the basis of the protocol specification;
wherein executable program code represents the protocol specification for handling the data, and that the executable program code comprises a precompiled object code, wherein the processor (203) is further designed to link the precompiled object code to previously stored object code, wherein the network entity (200) provides functions with which the protocol object can interact in various ways,
**characterized in that**
the supplied functions of the network entity (200) include a function that allows storage of the data in a queue, and/or that the supplied functions of the network entity (200) include a function in a mobile wireless communication network that allows the configuration of data that are to be signalled on broadcast channels, in particular a network operator identifier and/or a cell identification and/or a location identification and/or a limitation.

6. Network entity (200) according to Claim 5, wherein the network entity (200) is designed to provide a runtime environment for executing the executable program code, and wherein the processor (203) is designed to execute the executable program code using the runtime environment.

7. Network entity (200) according to either of Claims 5 or 6, wherein the protocol object further displays a validity period of the data packet, wherein the validity period wherein the validity period displays a period for handling the data, and wherein the processor (203) is designed to compare a present point in time with a time period, and to handle the data if the present point in time lies within the time period.

8. Network entity (200) according to any one of Claims 5 to 7, wherein the data packet is signed cryptographically on the basis of a private signature key of the other network entity (100), wherein the processor (203) is designed to verify the signature of the data packet on the basis of a public signature verification key of the other network entity (100), wherein the private signature key and public signature verification key form a cryptographic key pair, and wherein the processor (203) is designed to handle the data if the signature of the data packet is successfully verified.

9. Network entity (200) according to any one of Claims 5 to 8, wherein the protocol object further displays an authorisation of the network entity (200) for handling of the data by the network entity (200), wherein the processor (203) is designed to verify the authorisation of the network entity (200), and wherein the processor (203) is further designed to handle the data if the authorisation is successfully verified.

10. Network entity (200) according to any one of Claims 5 to 9, wherein the handling of the data includes processing the data or forwarding the data via the communication network (301).

11. Communication system (300), having:
a network entity (100) according to any one of Claims 1 to 4; and
another network entity (200) according to any one of Claims 5 to 10; wherein the network entity (100) is designed to communicate with the other network entity (200) via a communication network (301), and wherein the other network entity (200) is designed to handle data on the basis of a protocol specification.

12. Method (400) for communicating between one network entity (100) and another network entity (200) via a communication network (301), wherein the network entity (100) comprises a processor (101) and a communication interface (103), with:
supply (401) of data by the processor (101);
generation (403) of a protocol object by the processor (101), wherein the protocol object displays a protocol specification for handling of the data by the other network entity (200), wherein the protocol object comprises an executable program code, wherein the executable program code is executable by the other network entity (200);
linking (405) of the data with the protocol object by the processor (101);
generation (407) of a data packet by the processor (101), wherein the data packet comprises the data and the protocol object; and
transmission (409) of the data packet to the other network entity (200) via the communication network (301) through the communication interface (103);
representation of the protocol specification for handling of the data in the executable program code,
generation of the executable program code and precompiled object code on the basis of the protocol specification by the processor (101), wherein the executable program code comprises the precompiled object code,
wherein the protocol object interacts in various ways with supplied functions of the other network entity (200),
**characterized in that**
the protocol object activates a function of the other network entity (200) that allows storage of the data in a queue, and/or that the protocol object activates a function of the other network entity (200) which allows the configuration in a mobile wireless communication network of data that are to be signalled on broadcast channels, in particular a network operator identifier and/or a cell identification and/or a location identification and/or a limitation.

13. Method (500) for handling of data on the basis of a protocol specification using a network entity (200), wherein the network entity (200) is designed to communicate with another network entity (100) via a communication network (301), and wherein the network entity (200) comprises a communication interface (201) and a processor (203), with
receiving (501) of a data packet from the other network entity (100) via the communication network (301) through the communication interface (201), wherein the data packet comprises the data and a protocol object, wherein the protocol object displays the protocol specification handling the data, wherein the protocol object comprises an executable program code;
determination (503) of the protocol specification on the basis of the protocol object by the processor (203);
execution of the executable program code by the processor (203); and
handling (505) of the data on the basis of the protocol specification by the processor (203);
representation of the protocol specification for handling of the data in the executable program code,
linking of precompiled object code to previously stored object code by the processor (203), wherein the executable program code comprises the precompiled object code,
wherein the protocol object interacts in various ways with supplied functions of the other network entity (200),
**characterized in that**
the protocol object comprises a program code which activates a function of the network entity (200) that allows storage of the data in a queue, and/or that the protocol object activates a function of the network entity (200) which allows the configuration in a mobile wireless communication network of data that are to be signalled on broadcast channels, in particular a network operator identifier and/or a cell identification and/or a location identification and/or a limitation.

14. Computer program for carrying out the method (400) according to Claim 12 or the method (500) according to Claim 13 when the computer program is run on a computer.

## Revendications

1. Entité de réseau (100) pour communiquer avec une autre entité de réseau (200) via un réseau de communication (301), comportant :
un processeur (101), qui est conçu pour fournir des données et pour générer un objet de protocole, dans lequel l'objet de protocole indique une spécification de protocole pour gérer les données par l'autre entité de réseau (200), dans lequel l'objet de protocole comprend un code de programme exécutable, dans lequel code de programme exécutable peut être exécuté par l'autre entité de réseau (200), dans lequel le processeur (101) est également conçu pour générer un paquet de données, dans lequel le paquet de données comprend les données et l'objet de protocole comprend un code d'objet précompilé ; et
une interface de communication (103), qui est conçue pour envoyer un paquet de données à l'autre entité de réseau (200) via le réseau de communication (301) ;
dans laquelle le code de programme exécutable code représente le spécification de protocole pour gérer le traitement des données, dans lequel le processeur (101) est également conçu pour lier les données à l'objet de protocole, pour générer le code de programme exécutable et le code d'objet précompilé sur la base de la spécification de protocole,
dans laquelle l'objet de protocole est configuré pour interagir de diverses manières avec les fonctionnalités fournies de l'autre entité de réseau (200),
**caractérisée en ce que**,
les fonctions fournies de l'entité de réseau (200) incluent une fonction, qui permet une mémorisation des données dans une file d'attente et/ou que les fonctions fournies de l'entité de réseau (200) incluent une fonction dans un réseau de communication cellulaire, qui permet la configuration des données à signaler sur les canaux de diffusion, à savoir un identifiant d'opérateur de réseau et/ou un identifiant de cellule et/ou un identifiant de localisation et/ou une restriction.

2. Entité de réseau (100) selon la revendication 1, dans laquelle l'objet de protocole indique en outre une période de validité du paquet de données, dans laquelle la période de validité indique une période de traitement des données par l'autre entité de réseau (200) .

3. Entité de réseau (100) selon une des revendications précédentes, dans laquelle l'entité de réseau (100) se voit attribuer une clé de signature privée, dans laquelle le processeur (101) est conçu pour signer cryptographiquement le paquet de données sur la base de la clé de signature privée.

4. Entité de réseau (100) selon une quelconque des revendications précédentes, dans laquelle l'objet de protocole indique en outre une autorisation de l'autre entité de réseau (200) pour gérer les données via l'autre entité de réseau (200).

5. Entité de réseau (200) pour gérer des données sur la base d'une spécification de protocole, dans lequel l'entité de réseau (200) est conçue pour communiquer avec une autre entité de réseau (100) via un réseau de communication (301), comportant :
une interface de communication (201), qui est conçue pour recevoir un paquet de données depuis l'autre entité de réseau (100) via le réseau de communication (301), dans lequel le paquet de données comprend les données et un objet de protocole, dans lequel l'objet de protocole indique la spécification de protocole pour gérer les données, dans lequel l'objet de protocole comprend un code de programme exécutable ; et un processeur (203) qui est conçu pour déterminer la spécification de protocole sur la base de l'objet de protocole, pour exécuter le code de programme exécutable et pour gérer les données sur la base de la spécification de protocole,
dans lequel le code de programme exécutable utilise la spécification de protocole pour gérer des données et en ce que le code de programme exécutable comprend un code d'objet précompilé, dans lequel le processeur (203) est en outre conçu pour lier le code d'objet précompilé au code d'objet prémémorisé, dans lequel l'entité de réseau (200) fournit des fonctions avec lesquelles l'objet de protocole peut interagir de diverses manières,
**caractérisée en ce que**
les fonctions fournies de l'entité de réseau (200) comprennent une fonction qui permet une mémorisation aux données dans une file d'attente et/ou que les fonctions fournies par l'entité de réseau (200) comprennent une fonction dans un réseau de communication mobile, qui permet la configuration des données à signaler sur les canaux de diffusion, à savoir un identifiant d'opérateur de réseau et/ou un identifiant de cellule et/ou un identifiant de localisation et/ou une restriction.

6. Entité de réseau (200) selon la revendication 5, dans laquelle l'entité de réseau (200) est configurée pour fournir un environnement d'exécution pour exécuter le code de programme exécutable, et dans laquelle le processeur (203) est configuré pour exécuter le code de programme exécutable en utilisant l'environnement d'exécution.

7. Entité de réseau (200) selon la revendication 5 ou 6, dans laquelle l'objet de protocole indique en outre une période de validité du paquet de données, dans laquelle la période de validité indique une période de temps pour traiter les données, et dans laquelle le processeur (203) est adapté pour associer une heure actuelle à la période de temps pour comparer et traiter les données si l'heure actuelle se situe dans la période.

8. Entité de réseau (200) selon une quelconque des revendications 5 à 7, dans laquelle le paquet de données est signé cryptographiquement sur la base d'une clé de signature privée de l'autre entité de réseau (100), dans laquelle le processeur (203) est conçu pour signer le paquet de données sur la base d'une clé publique de vérification de signature de l'autre entité de réseau (100), dans laquelle la clé de signature privée et la clé publique de vérification de signature forment une paire de clés cryptographiques, et dans laquelle le processeur (203) est adapté pour traiter les données si la signature du paquet de données est vérifiée avec succès.

9. Entité de réseau (200) selon une quelconque des revendications 5 à 8, dans laquelle l'objet de protocole indique en outre une autorisation de l'entité de réseau (200) pour traiter les données par l'entité de réseau (200), dans laquelle le processeur (203) est conçu pour vérifier l'autorisation de l'entité de réseau (200), et dans laquelle le processeur (203) est en outre adapté pour traiter les données si l'autorisation est vérifiée avec succès.

10. Entité de réseau (200) selon une quelconque des revendications 5 à 9, dans laquelle la gestion des données comprend le traitement des données ou l'acheminement des données via le réseau de communication (301).

11. Système de communication (300), comportant :
une entité de réseau (100) selon une quelconque des revendications 1 à 4 ; et
une autre entité de réseau (200) selon une quelconque des revendications 5 à 10 ; dans lequel l'entité de réseau (100) est conçue pour communiquer avec l'autre entité de réseau (200) via un réseau de communication (301), et dans lequel l'autre entité de réseau (200) est conçue pour gérer des données sur la base d'une spécification de protocole.

12. Procédé (400) pour communiquer une entité de réseau (100) avec une autre entité de réseau (200) via un réseau de communication (301), dans lequel l'entité de réseau (100) comprend un processeur (101) et une interface de communication (103) comprenant :
la fourniture (401) de données par le processeur (101) ;
la génération (403) d'un objet de protocole par le processeur (101), dans lequel l'objet de protocole indique une spécification de protocole pour traiter les données par l'autre entité de réseau (200), dans lequel l'objet de protocole comprend un code de programme exécutable, dans lequel le code de programme exécutable est exécutable par l'autre entité de réseau (200),
l'association, par le processeur (405), des données à l'objet de protocole (101);
la génération (407) d'un paquet de données par le processeur (101), dans lequel le paquet de données comprenant les données et l'objet de protocole ; et
la transmission (409) du paquet de données à l'autre entité de réseau (200) via le réseau de communication (301) à travers l'interface de communication (103);
la représentation de la spécification de protocole pour gérer les données dans le code du programme exécutable
la génération, par le processeur, du code de programme exécutable et du code d'objet précompilé sur la base de la spécification de protocole (101), dans lequel le code du programme exécutable comprend le code d'objet précompilé,
dans lequel l'objet de protocole interagit de diverses manières avec les fonctions de l'autre entité de réseau (200),
**caractérisé en ce que**,
l'objet de protocole adresse une fonction de l'autre entité de réseau (200), qui permet de mémoriser les données dans une file d'attente et/ou que l'objet de protocole adresse une fonction de l'autre entité de réseau (200) qui, dans un réseau de communication mobile, permet la configuration des données à signaler sur les canaux de diffusion, à savoir un identifiant d'opérateur de réseau et/ou un identifiant de cellule et/ou un identifiant de localisation et/ou une restriction.

13. Procédé (500) pour gérer des données sur la base d'une spécification de protocole utilisant une entité de réseau (200), dans laquelle l'entité de réseau (200) est conçue pour communiquer avec une autre entité de réseau (100) via un réseau de communication (301), et dans laquelle l'entité de réseau (200) comprend une interface de communication (201) et un processeur (203), comportant :
la réception (501) d'un paquet de données de l'autre entité de réseau (100) via le réseau de communication (301) par l'interface de communication (201), dans lequel le paquet de données comprend les données et un objet de protocole, dans lequel l'objet de protocole indique la spécification de protocole pour gérer les données, dans lequel l'objet protocole comprend un code de programme exécutable ;
la détermination (503) de la spécification de protocole sur la base de l'objet de protocole par le processeur (203);
l'exécution du code programme exécutable par le processeur (203); et
la gestion (505) par le processeur (203) des données sur la base de la spécification de protocole ;
la représentation de la spécification de protocole de traitement des données dans le code de programme exécutable ;
l'association du code d'objet précompilé avec le code d'objet prémémorisé par le processeur (203), dans lequel le code de programme exécutable comprend le code d'objet précompilé
dans lequel l'objet de protocole interagit de diverses manières avec les fonctions fournies de l'autre entité de réseau (200),
**caractérisé en ce que**,
l'objet de protocole comporte un code de programme, qui adresse une fonction de l'entité de réseau (200), qui permet de mémoriser les données dans une file d'attente, et/ou que l'objet de protocole adresse une fonction de l'entité de réseau (200), qui permet de signaler la configuration des données sur les canaux de diffusion dans un réseau de radiocommunication mobile, à savoir un identifiant d'opérateur de réseau et/ou un identifiant de cellule et/ou un identifiant de localisation et/ou une restriction.

14. Programme d'ordinateur pour exécuter le procédé (400) selon la revendication 12 ou le procédé (500) selon la revendication 13, si le programme informatique est exécuté sur un ordinateur.
